# EUROPEAN PATENT APPLICATION

(11) **EP 4 783 251 A1**
(43) Date of publication of application: **29.07.2026**
(21) Application number: 24914805.7
(22) Date of filing: 02.08.2024
(51) Int. Cl.: H01M 4/139, B05C 5/02

(54) **COATING DIE, AND COATING DEVICE FOR BATTERY ELECTRODE SHEET**

(30) Priority: 02.01.2024 CN 202410002121
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: ZHAN, Bingyang, Ningde, Fujian 352100 (CN); ZHANG, Jingdong, Ningde, Fujian 352100 (CN); ZHANG, Lai, Ningde, Fujian 352100 (CN); CHEN, Weigang, Ningde, Fujian 352100 (CN); WANG, Qiangjun, Ningde, Fujian 352100 (CN); ZHEN, Zhihui, Ningde, Fujian 352100 (CN); LV, Shengjuan, Ningde, Fujian 352100 (CN)
(74) Representative: Ziebig Hengelhaupt Intellectual Property Attorneys Patentanwaltskanzlei PartGmbB
(86) International application number: PCT/CN2024/109583
(87) International publication number: WO 2025/145583

(57) **Abstract**

A coating die and a coating apparatus for a battery electrode plate are provided. The coating die includes a first die (1) and a second die (2). The first die (1) includes a first main body (11) and a first component (12), where the first component (12) is detachably connected to the first main body (11). The second die (2) and the first die (1) are arranged along a first direction (Z). A cavity (3) for accommodating a slurry is formed between the second die (2) and the first main body (11). A discharge port (4) in communication with the cavity (3) is formed between the first component (12) and the second die (2). When the first component (12) is worn, the worn first component (12) only needs to be removed, and a new first component (12) is installed, thereby reducing the downtime of the coating die, improving the coating efficiency, and reducing the production costs.

## Description

### CROSS-REFERENCE TO RELATED APPLICATIONS

This application claims priority to Chinese Patent Application No. 202410002121.3, filed on January 2, 2024 and entitled "COATING DIE AND COATING APPARATUS FOR BATTERY ELECTRODE PLATE", which is incorporated herein by reference in its entirety.

### TECHNICAL FIELD

This application relates to the field of coating processes, and in particular, to a coating die and a coating apparatus for a battery electrode plate.

### BACKGROUND

Coating is an essential process during battery production and is a critical process that directly affects various performance such as capacity and lifespan of batteries. Coating involves uniformly and continuously or intermittently applying a prepared paste-like viscous slurry onto a substrate (an aluminum foil or a copper foil). How to improve the coating efficiency during coating has always been a research focus in the industry.

### SUMMARY

This application provides a coating die and a coating apparatus for a battery electrode plate, which can improve the coating efficiency.

According to a first aspect, this application provides a coating die including a first die and a second die, where the first die includes a first main body and a first component, the first component being detachably connected to the first main body; and the second die and the first die are arranged along a first direction, where a cavity for accommodating a slurry is formed between the second die and the first main body, and a discharge port in communication with the cavity is formed between the first component and the second die.

When the first component is worn, the worn first component only needs to be removed, and a new first component is installed, thereby reducing the downtime of the coating die, improving the coating efficiency, and reducing the production costs. The worn first component can be individually polished and reused, thereby extending the service life of the first component.

In some embodiments, the coating die further includes a first fixing member, where the first fixing member is movably disposed on the first main body along the first direction; and in the first direction, a portion of the first component is clamped between the first fixing member and the first main body.

The first fixing member and the first main body can clamp the first component from both sides in the first direction, thereby fixing the first component to the first main body. When the first component needs to be replaced, the first fixing member can be moved along the first direction to release the constraint of the first fixing member on the first component. A compression assembly manner is used, facilitating disassembly and installation.

In some embodiments, the first fixing member is threadedly connected to the first main body, and the first fixing member can rotate to adjust pressure applied to the first component by the first fixing member. The first component can be fastened to or released from the first main body by rotating the first fixing member, facilitating the disassembly and installation of the first component.

In some embodiments, a side of the first component facing the first fixing member along the first direction is provided with a limiting recess, and the first fixing member abuts against a bottom surface of the limiting recess.

A portion of the first fixing member extends into the limiting recess, and the first fixing member can also limit the first component in another direction intersecting the first direction, thereby improving the stability of the first component and improving the consistency of the coating weight.

In some embodiments, a side of the first main body along a second direction is provided with a first recess, the second direction intersecting the first direction; and a portion of the first component is accommodated in the first recess. When the first component is installed, the first recess can position the first component, thereby simplifying the assembly process.

In some embodiments, the first main body includes a first protrusion and a second protrusion arranged along the first direction, the first recess is disposed between the first protrusion and the second protrusion, and the first protrusion is located on a side of the second protrusion close to the second die; and the coating die further includes a first fixing member, and the first fixing member is movably connected to the second protrusion along the first direction and configured to press against the first component.

The first protrusion and the second protrusion can limit the first component from both sides in the first direction, thereby improving the stability of the first component, reducing vibration of the first component, and improving the consistency of the coating weight. The first fixing member can clamp the first component with the first protrusion from both sides to fix the first component. The first component can also be released by moving the first fixing member.

In some embodiments, the coating die further includes at least one adjustment sheet disposed in the first recess, where in the first direction, the adjustment sheet is disposed between the first protrusion and the first component.

When the first component is worn, a surface of the first component facing the second die needs to be polished. After polished, a dimension of the first component along the first direction decreases. If the first component remains in an original position, a spacing between the first component and the second die along the first direction increases, and the discharge port is also enlarged. In the embodiments of this application, the adjustment sheet can be removed to move the entire first component toward the second die, compensating for the dimensional loss of the first component after polished, and maintaining a constant spacing between the first component and the second die along the first direction.

In some embodiments, a thickness of the adjustment sheet is 20 µm to 30 µm. The adjustment sheet has a small thickness, which can reduce a single polishing amount of the first component, reduce the polishing difficulty, and increase the number of cycles for reusing the first component.

In some embodiments, the first component is disposed on a side of the first main body along a second direction, the second direction intersecting the first direction; and a side of the first component facing the first main body along the second direction is provided with a second recess, the first main body includes a first protrusion accommodated in the second recess, and the first protrusion is fixed to the first component.

When the first component is installed, the second recess can cooperate with the first protrusion to position the first component, simplifying the assembly process. In addition, the first protrusion can also be used to fix the first component.

In some embodiments, the coating die further includes a first fixing member and at least one adjustment sheet, where the adjustment sheet is accommodated in the second recess; and in the first direction, the first fixing member is located on a side of the first component facing away from the first protrusion and configured to press against the first component, and the adjustment sheet is disposed between the first component and the first protrusion.

In some embodiments, the first component includes a first surface facing the second die, the discharge port is formed between the first surface and the second die, and the second recess extends to the first surface along the first direction; and the first protrusion includes a second surface facing the second die, and the first surface is flush with the second surface.

The first surface being flush with the second surface allows a slurry flowing along the second surface to smoothly flow onto the first surface, thereby reducing the flow resistance of the slurry. The second recess extending to the first surface can reduce an area of the first surface, making it easier to finely polish the first surface with a small area, thereby reducing the roughness of the first surface, reducing a friction coefficient of the first surface, reducing the friction between the first surface and the slurry, and improving the wear resistance of the first surface.

In some embodiments, the first component further includes a first side surface and a second side surface for defining the second recess, the second side surface is located on a side of the first protrusion away from the second die, and the first side surface is connected to the second side surface and the first surface; and in the second direction, the first protrusion abuts against the first side surface to reduce the risk of the slurry entering between the first protrusion and the first side surface.

In some embodiments, an end of the first component away from the first main body along the second direction has a first end portion; and in a direction away from the first main body, a cross section of the first end portion perpendicular to the second direction gradually decreases.

When an outer end surface of the first end portion away from the first main body is worn, the first end portion can be polished to restore the flatness of the outer end surface. In the embodiments of this application, the outer end surface has a small area, which can reduce the polishing difficulty.

In some embodiments, the first die includes a plurality of first components arranged along a third direction, the third direction being perpendicular to the first direction; and adjacent first components abut against and are connected to each other along the third direction. In the embodiments of this application, an extension length of a single first component can be reduced, reducing the forming difficulty of the first component.

In some embodiments, a surface hardness of the first component is higher than a surface hardness of the first main body. The first component has a higher surface hardness than the first main body. The first component is more wear-resistant, thereby extending the service life of the first component and reducing the frequency of replacing the first component.

In some embodiments, the surface hardness of the first component is 30 HRC to 70 HRC. The first component is more wear-resistant, thereby extending the service life of the first component and reducing the frequency of replacing the first component.

In some embodiments, the first component includes a substrate and a protective layer disposed on an outer surface of the substrate, and at least a portion of the protective layer is located on a side of the substrate facing the second die; and a surface hardness of the protective layer is higher than a surface hardness of the substrate.

The provision of the protective layer with high surface hardness allows the first component to be more wear-resistant, thereby extending the service life of the first component and reducing the frequency of replacing the first component. The substrate can have a relatively low surface hardness, allowing for more flexible material selection for the substrate, thereby reducing the cost of the first component.

In some embodiments, a material of the substrate is the same as a material of the first main body. In the embodiments of this application, the types of the materials can be reduced, reducing the cost.

In some embodiments, the protective layer includes a diamond-like coating or a nanocomposite coating. Both the diamond-like coating and the nanocomposite coating have high surface hardness.

In some embodiments, a material of the first component includes at least one of cast stone, alumina ceramic, silicon carbide ceramic, zirconia ceramic, engineering polymer plastic, wear-resistant rubber, stainless steel with a diamond-like coating on a surface, or stainless steel with a nanocomposite coating on an outer surface.

Materials such as cast stone, alumina ceramic, silicon carbide ceramic, zirconia ceramic, engineering polymer plastic, and wear-resistant rubber have insulating properties. The first component made from these materials is less susceptible to electrochemical corrosion by the slurry, thereby slowing the wear of the first component, extending the service life of the first component, and reducing the frequency of replacing the first component.

Materials such as cast stone, alumina ceramic, silicon carbide ceramic, zirconia ceramic, stainless steel with the diamond-like coating on the surface, and stainless steel with the nanocomposite coating on the outer surface have high surface hardness and strong wear resistance and are capable of withstanding the impact and friction of slurry particles. The first component made from these materials is less prone to wear, thereby extending the service life of the first component and reducing the frequency of replacing the first component.

In some embodiments, the second die includes a second main body and a second component, the second main body and the first main body are arranged along the first direction and configured to define the cavity, and the second component and the first component are arranged along the first direction and configured to define the discharge port.

According to a second aspect, this application provides a coating apparatus for a battery electrode plate, including the coating die according to any one of the foregoing embodiments.

### BRIEF DESCRIPTION OF DRAWINGS

The features, advantages, and technical effects of exemplary embodiments of this application will be described below with reference to the accompanying drawings in the embodiments of this application.
FIG. 1 is a schematic structural diagram of a coating die according to some embodiments of this application;
FIG. 2 is a schematic rear view of a coating die according to some embodiments of this application;
FIG. 3 is a schematic enlarged view of the coating die shown in FIG. 1 at a circular frame;
FIG. 4 is a schematic cross-sectional view of the coating die shown in FIG. 2 along A-A direction;
FIG. 5 is a schematic enlarged view of FIG. 4 at a circular frame;
FIG. 6 is a schematic diagram of a first component of a coating die according to some embodiments of this application;
FIG. 7 is a partial schematic cross-sectional view of a coating die according to some other embodiments of this application;
FIG. 8 is a partial schematic cross-sectional view of a coating die according to some other embodiments of this application;
FIG. 9 is a partial schematic cross-sectional view of a coating die according to some other embodiments of this application;
FIG. 10 is a schematic structural diagram of a first component of a coating die according to some other embodiments of this application; and
FIG. 11 is a schematic cross-sectional view of a coating die according to some other embodiments of this application.

Description of reference signs:
1. first die; 2. second die; 3. cavity; 4. discharge port; 5. feed port; 6. gasket; 7. first fixing member; 8. second fixing member; 9. adjustment sheet;
11. first main body; 111. first recess; 112. first protrusion; 112a. second surface; 113. second protrusion;
12. first component; 121. second recess; 122. first end portion; 123. limiting recess; 124. substrate; 125. protective layer; 12a. first surface; 12b. first side surface; 12c. second side surface; 12d. outer end surface; 12e. third surface; 12f. third side surface; 12g. first inclined surface; 12h. second inclined surface; 12i. fourth surface;
13. pressing strip;
21. second main body; 211. third recess; 212. third protrusion; 212a. sixth surface; 213. fourth protrusion;
22. second component; 221. fourth recess; 22a. fifth surface;
X. third direction; Y. second direction; and Z. first direction.

### DESCRIPTION OF EMBODIMENTS

To make the objectives, technical solutions, and advantages of the embodiments of this application clearer, the technical solutions in the embodiments of this application will be clearly described below with reference to the accompanying drawings. Obviously, the described embodiments are some but not all embodiments of this application. Based on the embodiments in this application, all other embodiments obtained by those of ordinary skill in the art without creative efforts fall within the scope of protection of this application.

Unless otherwise defined, all technical and scientific terms used in this application have the same meaning as commonly understood by those skilled in the technical field of this application; the terms used in the description of this application are for the purpose of describing specific embodiments only and are not intended to limit this application; and the terms "include", "comprise", "have", and any variations thereof in the description, claims, and the above description of the accompanying drawings of this application are intended to cover non-exclusive inclusion. The terms "first", "second", and the like in the description, claims, or the above accompanying drawings of this application are used to distinguish different objects and not to describe a specific order or primary-secondary relationship.

Reference to "embodiment" in this application means that a specific feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments.

In the description of this application, it should be noted that, unless otherwise explicitly specified and limited, the terms "install", "connect", "join", and "attach" should be understood in their general senses. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in this application can be understood according to specific circumstances.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various members and sizes such as overall thickness, length, and width of integrated apparatuses in the embodiments of this application are merely for illustrative purposes and should not constitute any limitations on this application.

The term "a plurality of" in this application refers to two or more (including two), and similarly, "a plurality of groups" refers to two or more groups (including two groups).

The term "parallel" in this application includes not only absolute parallelism but also approximate parallelism as conventionally understood in engineering; similarly, "perpendicular" includes not only absolute perpendicularity but also approximate perpendicularity as conventionally understood in engineering.

Coating involves applying a coating material in liquid or powder form as a thin layer on surfaces of objects such as fabric, paper, metal foil, or plates. Coating is an indispensable step in the manufacturing process of battery cells.

A battery cell generally includes an electrode assembly. The electrode assembly includes a positive electrode plate and a negative electrode plate. During the charging and discharging process of the battery cell, active ions (for examples, lithium ions) are intercalated and deintercalated back and forth between the positive electrode plate and the negative electrode plate.

The positive electrode plate may include a positive electrode current collector and a positive electrode active material layer disposed on at least one surface of the positive electrode current collector. For example, the positive electrode current collector may be a metal foil or a composite current collector. For example, the positive electrode active material layer includes a positive electrode active material. The positive electrode active material may include at least one of the following materials: lithium-containing phosphate, lithium transition metal oxide, and their respective modified compounds.

The negative electrode plate may include a negative electrode current collector and a negative electrode active material layer disposed on at least one surface of the negative electrode current collector. For example, the negative electrode current collector may be a metal foil, foamed metal, foamed carbon, or a composite current collector. For example, the negative electrode active material layer includes a negative electrode active material. The negative electrode active material may include at least one of the following materials: artificial graphite, natural graphite, soft carbon, hard carbon, a silicon-based material, a tin-based material, and lithium titanate.

During production of a battery cell, both a positive electrode plate and a negative electrode plate are manufactured using a coating process. For example, a positive electrode active material, a conductive agent, a binder, and a solvent are mixed to form a paste-like viscous slurry. Then, the paste-like viscous slurry is uniformly and continuously or intermittently applied onto a substrate (for example, an aluminum foil) to produce the positive electrode plate.

In related art, a coating die is typically used to apply a slurry onto the substrate. During the coating process, a portion of the coating die close to a discharge port is subjected to electrochemical corrosion by the slurry and friction from particles in the slurry. After a relatively long period of continuous coating production, significant wear occurs on a portion of the coating die, leading to abnormal partial coating weight and affecting the consistency of coating weight.

After the coating die is worn, the coating die typically needs to be polished, which causes production line downtime, reduces the coating efficiency, and increases the production costs.

In view of this, an embodiment of this application provides a technical solution that involves providing a detachable component at a discharge position, so that when the component is worn, the component can be replaced, thereby shortening the downtime, improving the coating efficiency, and reducing the production costs.

A coating die according to an embodiment of this application can be used for, but is not limited to, the production of electrode plates, and can also be used for the production of other workpieces requiring a coating process.

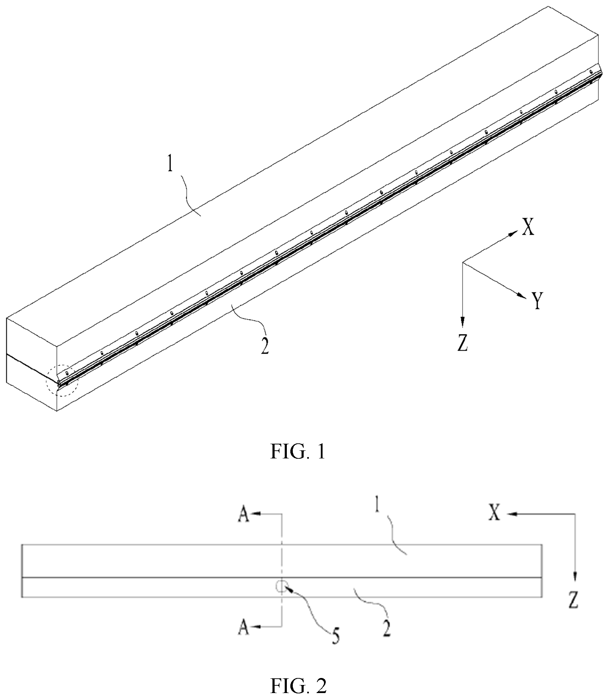

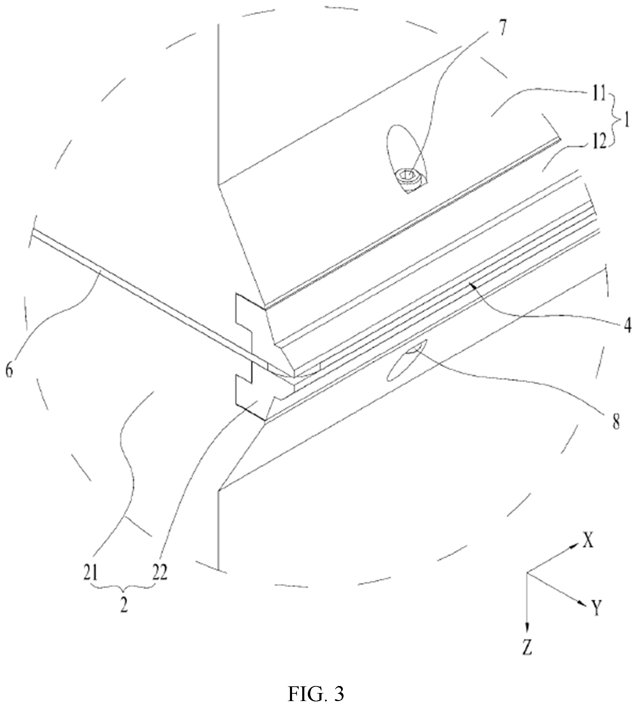

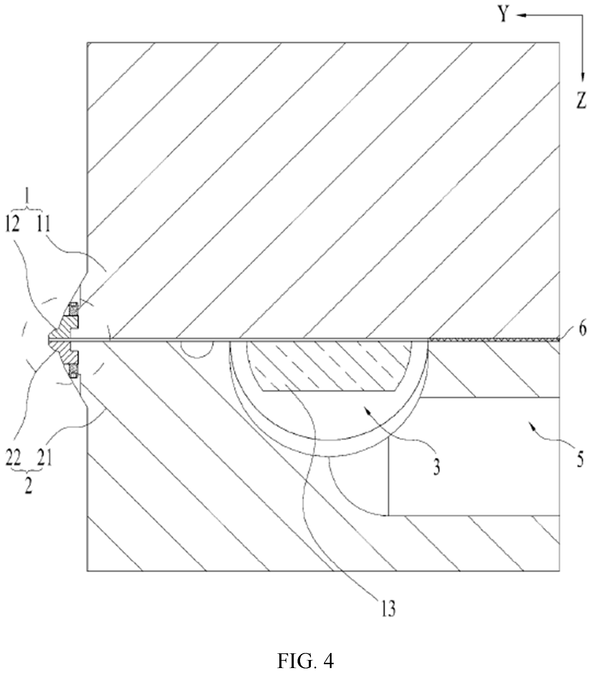

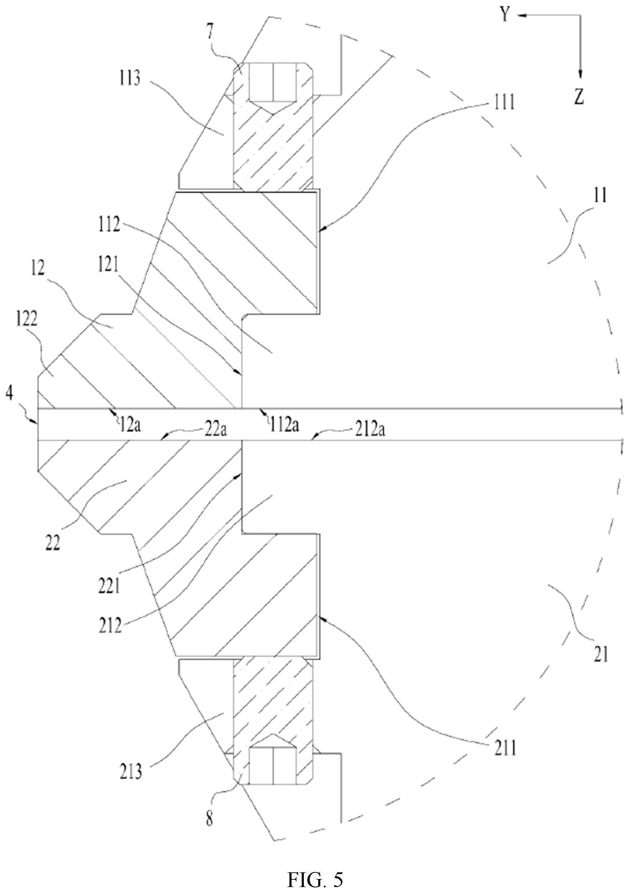

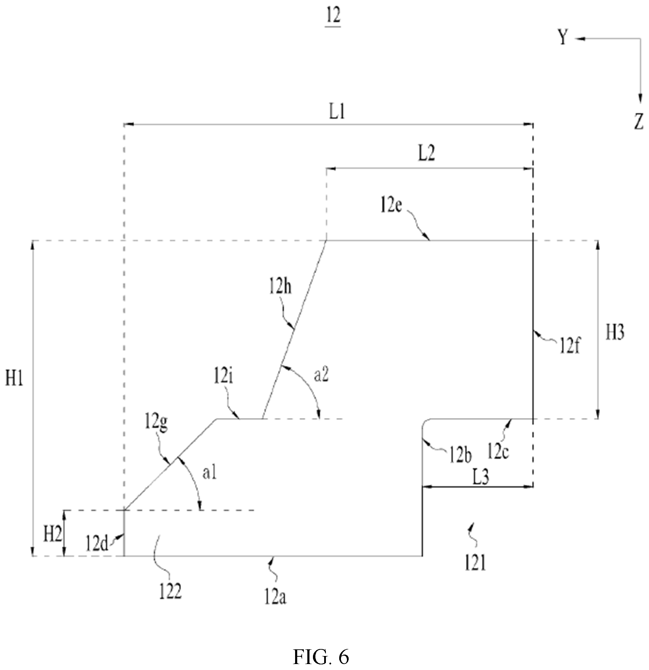

FIG. 1 is a schematic structural diagram of a coating die according to some embodiments of this application. FIG. 2 is a schematic rear view of a coating die according to some embodiments of this application. FIG. 3 is a schematic enlarged view of the coating die shown in FIG. 1 at a circular frame. FIG. 4 is a schematic cross-sectional view of the coating die shown in FIG. 2 along A-A direction. FIG. 5 is a schematic enlarged view of the coating die shown in FIG. 4 at a circular frame. FIG. 6 is a schematic diagram of a first component of a coating die according to some embodiments of this application.

Referring to FIG. 1 to FIG. 6, the coating die according to the embodiments of this application includes a first die 1 and a second die 2, where the first die 1 and the second die 2 are arranged along a first direction Z.

For example, the first direction Z may be parallel to a vertical direction. One of the first die 1 and the second die 2 may be an upper die, and the other of the first die 1 and the second die 2 may be a lower die.

In some embodiments, the first die 1 includes a first main body 11 and a first component 12, the first component 12 being detachably connected to the first main body 11. A cavity 3 for accommodating a slurry is formed between the second die 2 and the first main body 11, and a discharge port 4 in communication with the cavity 3 is formed between the first component 12 and the second die 2.

The coating die can be configured to apply the slurry onto a surface of a substrate. For example, the substrate may be a strip structure passing through the discharge port 4. Under pressure, the slurry is applied onto the surface of the substrate through the discharge port 4. The slurry applied to the substrate surface forms a coating.

For example, the substrate is a metal foil. The slurry includes an active material, a binder, a conductive agent, and a solvent. Optionally, the active material is a positive electrode active material or a negative electrode active material.

The first component 12 may be connected to the first main body 11 through snapping, crimping, connection via a fastener, or other detachable connection methods.

The first component 12 and the first main body 11 may be made of the same material or different materials.

One or more first components 12 may be provided.

During the coating process, the slurry may corrode or wear the first component 12 when the slurry flows out of the discharge port 4. In the embodiments of this application, even if the first component 12 is worn, the worn first component 12 only needs to be removed, and a new first component 12 is installed, thereby reducing the downtime of the coating die, improving the coating efficiency, and reducing the production costs. The worn first component 12 can be individually polished and reused, thereby extending the service life of the first component 12.

In some embodiments, the first main body 11 is connected to the second die 2. For example, the first main body 11 and the second die 2 are connected through connection via a fastener, abutting, or other methods.

In some embodiments, the coating die is provided with a feed port 5 in communication with the cavity 3. The feed port 5 is used to be connected to an external feeding device. The feeding device injects the slurry into the feed port 5 at a certain pressure. One or more feed port 5 may be provided.

The feed port 5 may be provided on the first main body 11 or the second die 2. For example, the feed port 5 is provided on the second die 2.

In some embodiments, the coating die further includes a gasket 6. The gasket 6 may be disposed between the first die 1 and the second die 2 to separate the first die 1 from the second die 2 in the first direction Z.

The gasket 6 may also separate the first component 12 from the second die 2 to form the discharge port 4 between the first component 12 and the second die 2.

In some embodiments, a thickness of the gasket 6 is 0.5 mm to 2 mm. For example, the thickness of the gasket 6 is 0.5 mm, 0.6 mm, 0.8 mm, 1.0 mm, 1.2 mm, 1.4 mm, 1.6 mm, 1.8 mm, or 2 mm.

In some embodiments, the gasket 6 divides the discharge port 4 into a plurality of sub-ports to form a plurality of coating tracks on an electrode plate.

In some embodiments, the coating die further includes a first fixing member 7, where the first fixing member 7 is movably disposed on the first main body 11 along the first direction Z. In the first direction Z, a portion of the first component 12 is clamped between the first fixing member 7 and the first main body 11.

One or more first fixing members 7 may be provided. Optionally, a plurality of first fixing members 7 are provided, and the plurality of first fixing members 7 are arranged along a third direction X. The third direction X, the second direction Y, and the first direction Z are perpendicular to each other.

The first fixing member 7 and the first main body 11 can clamp the first component 12 from both sides in the first direction Z, thereby fixing the first component 12 to the first main body 11. When the first component 12 needs to be replaced, the first fixing member 7 can be moved along the first direction Z to release the constraint of the first fixing member 7 on the first component 12. A compression assembly manner is used, facilitating disassembly and installation.

In some embodiments, the first fixing member 7 is threadedly connected to the first main body 11, and the first fixing member 7 can rotate to adjust pressure applied to the first component 12 by the first fixing member 7.

The first fixing member 7 may be a bolt, a stud, a screw, or another threaded member. For example, a thread axis of a thread of the first fixing member 7 may be parallel to the first direction Z.

The first component 12 can be fastened to or released from the first main body 11 by rotating the first fixing member 7, facilitating the disassembly and installation of the first component 12.

In some alternative embodiments, the first fixing member 7 may be a pressing rod or a pressing block. The coating die further includes a driver connected to the first fixing member 7, where the driver is capable of driving the first fixing member 7 to move along the first direction Z. For example, the driver may be a cylinder or a linear motor.

In some embodiments, a side of the first main body 11 along a second direction Y is provided with a first recess 111. The second direction Y intersect the first direction Z. A portion of the first component 12 is accommodated in the first recess 111.

Optionally, the second direction Y is perpendicular to the first direction Z.

When the first component 12 is installed, the first recess 111 can position the first component 12, thereby simplifying the assembly process.

For example, the first component 12 can be inserted into the first recess 111 along the second direction Y.

In some embodiments, the first main body 11 includes a first protrusion 112 and a second protrusion 113 arranged along the first direction Z. The first recess 111 is disposed between the first protrusion 112 and the second protrusion 113. The first protrusion 112 is located on a side of the second protrusion 113 close to the second die 2.

The first protrusion 112 and the second protrusion 113 can limit the first component 12 from both sides in the first direction Z, thereby improving the stability of the first component 12, reducing vibration of the first component 12, and improving the consistency of the coating weight.

In some embodiments, the coating die further includes a first fixing member 7. The first fixing member 7 is movably connected to the second protrusion 113 along the first direction Z and configured to press against the first component 12. The first fixing member 7 can clamp the first component 12 with the first protrusion 112 from both sides to fix the first component 12. The first component 12 can also be released by moving the first fixing member 7.

In some embodiments, the first fixing member 7 is threadedly connected to the second protrusion 113. Optionally, an end of the first fixing member 7 away from the first component 12 is exposed to facilitate rotation of the first component 12 by an external device.

In some embodiments, the first fixing member 7 may also be omitted. The first component 12 is inserted into the first recess 111 and forms an interference fit with the first main body 11, thereby fixing the first component 12.

In some embodiments, the first component 12 is disposed on a side of the first main body 11 along a second direction Y. The second direction Y intersects the first direction Z. A side of the first component 12 facing the first main body 11 along the second direction Y is provided with a second recess 121. The first main body 11 includes a first protrusion 112 accommodated in the second recess 121. The first protrusion 112 is fixed to the first component 12.

When the first component 12 is installed, the second recess 121 can cooperate with the first protrusion 112 to position the first component 12, simplifying the assembly process. In addition, the first protrusion 112 can also be used to fix the first component 12.

In some embodiments, the first component 12 includes a first surface 12a facing the second die 2. The first surface 12a and the second die 2 form the discharge port 4. The second recess 121 extends to the first surface 12a along the first direction Z. The first protrusion 112 includes a second surface 112a facing the second die 2. The first surface 12a is flush with the second surface 112a.

The first surface 12a being flush with the second surface 112a allows a slurry flowing along the second surface 112a to smoothly flow onto the first surface 12a, thereby reducing the flow resistance of the slurry. The second recess 121 extending to the first surface 12a can reduce an area of the first surface 12a, making it easier to finely polish the first surface 12a with a small area, thereby reducing the roughness of the first surface 12a, reducing a friction coefficient of the first surface 12a, reducing the friction between the first surface 12a and the slurry, and improving the wear resistance of the first surface 12a.

In some embodiments, the first component 12 further includes a first side surface 12b and a second side surface 12c for defining the second recess 121. The second side surface 12c is located on a side of the first protrusion 112 away from the second die 2. The first side surface 12b is connected to the second side surface 12c and the first surface 12a.

In the second direction Y, the first protrusion 112 abuts against the first side surface 12b to reduce the risk of the slurry entering between the first protrusion 112 and the first side surface 12b.

In some embodiments, an end of the first component 12 away from the first main body 11 along the second direction Y has a first end portion 122. In a direction away from the first main body 11, a cross section of the first end portion 122 perpendicular to the second direction Y gradually decreases.

When an outer end surface 12d of the first end portion 122 away from the first main body 11 is worn, the first end portion 122 can be polished to restore the flatness of the outer end surface 12d. In the embodiments of this application, the outer end surface 12d has a small area, which can reduce the polishing difficulty.

In some embodiments, a dimension H1 of the first component 12 along the first direction Z is 5 mm to 30 mm. H1 ≥ 5 mm allows the first component 12 to have sufficient strength. H1 ≤ 30 mm can reduce the weight and volume of the first component 12, facilitating replacement.

In some embodiments, a dimension H2 of the outer end surface 12d along the first direction Z is 1 mm to 2 mm. The outer end surface 12d has a small area, which can reduce the polishing difficulty.

In some embodiments, the first component 12 includes a first surface 12a and a third surface 12e arranged along the first direction Z. For example, both the first surface 12a and the third surface 12e are perpendicular to the first direction Z. A spacing between the first surface 12a and the third surface 12e along the first direction Z is H1.

In some embodiments, the first fixing member 7 presses against the third surface 12e along the first direction Z.

In some embodiments, the second side surface 12c is parallel to the third surface 12e. In the first direction Z, a distance between the second side surface 12c and the third surface 12e is H3, and H3 is 3 mm to 15 mm.

For example, a depth of the second recess 121 along the first direction Z is H1-H3.

In some embodiments, the first component 12 includes a third side surface 12f, where the third side surface 12f is connected to the second side surface 12c and the third surface 12e.

For example, the third side surface 12f, the first side surface 12b, and the outer end surface 12d are all perpendicular to the second direction Y. For example, a dimension of the third side surface 12f along the first direction Z is H3.

In some embodiments, a dimension of the first component 12 along the second direction Y is L1, and L1 is 6 mm to 30 mm. For example, in the second direction Y, a spacing between the third side surface 12f and the outer end surface 12d is equal to L1.

In some embodiments, a dimension of the third surface 12e along the second direction Y is L2, and L2 is 4 mm to 20 mm.

In some embodiments, a depth of the second recess 121 along the second direction Y is L3, and L3 is less than L2, reducing the strength loss of the first component 12.

Optionally, L3 is 2 mm to 10 mm.

In some embodiments, the first end portion 122 includes a first inclined surface 12g. The first inclined surface 12g and the first surface 12a are respectively connected to both ends of the outer end surface 12d along the first direction Z. For example, an included angle between the first inclined surface 12g and a plane parallel to the first surface 12a is a1, and a1 is 30° to 50°.

In some embodiments, the first component 12 further includes a second inclined surface 12h. The second inclined surface 12h and the third side surface 12f are respectively connected to both ends of the third surface 12e along the second direction Y.

In some embodiments, an included angle between the second inclined surface 12h and another plane parallel to the first surface 12a is a2, and a2 is 50° to 80°.

In some embodiments, the first component 12 further includes a fourth surface 12i connected to the first inclined surface 12g and the second inclined surface 12h. Optionally, the fourth surface 12i is parallel to the first surface 12a.

In some embodiments, one first component 12 is provided. For example, the first component 12 is a strip structure extending along the third direction X.

In some embodiments, a surface hardness of the first component 12 is higher than a surface hardness of the first main body 11. The first component 12 has a higher surface hardness than the first main body 11. The first component 12 is more wear-resistant, thereby extending the service life of the first component 12 and reducing the frequency of replacing the first component 12.

For example, the aforementioned surface hardness may be Rockwell hardness.

In some embodiments, the surface hardness of the first component 12 is 30 HRC to 70 HRC. The first component 12 is more wear-resistant, thereby extending the service life of the first component 12 and reducing the frequency of replacing the first component 12.

For example, Rockwell hardness is an index of a hardness value determined by a plastic deformation depth of an indentation, with 0.002 mm as one hardness unit. In the Rockwell hardness test, different indenters and different test forces produce different combinations, corresponding to different Rockwell hardness scales. HRC may be the hardness obtained using a load of 150 kg and a diamond cone indenter.

Optionally, the surface hardness of the first component 12 is 30 HRC, 40 HRC, 45 HRC, 50 HRC, 60 HRC, or 70 HRC.

In some embodiments, a material of the first component 12 includes at least one of cast stone, alumina ceramic, silicon carbide ceramic, zirconia ceramic, engineering polymer plastic, wear-resistant rubber, stainless steel with a diamond-like coating on a surface, or stainless steel with a nanocomposite coating on an outer surface.

Materials such as cast stone, alumina ceramic, silicon carbide ceramic, zirconia ceramic, engineering polymer plastic, and wear-resistant rubber have insulating properties. The first component 12 made from these materials is less susceptible to electrochemical corrosion by the slurry, thereby slowing the wear of the first component 12, extending the service life of the first component 12, and reducing the frequency of replacing the first component 12.

Materials such as cast stone, alumina ceramic, silicon carbide ceramic, zirconia ceramic, stainless steel with the diamond-like coating on the surface, and stainless steel with the nanocomposite coating on the outer surface have high surface hardness and strong wear resistance and are capable of withstanding the impact and friction of slurry particles. The first component 12 made from these materials is less prone to wear, thereby extending the service life of the first component 12 and reducing the frequency of replacing the first component 12.

In some embodiments, the second die 2 includes a second main body 21 and a second component 22. The second main body 21 and the first main body 11 are arranged along the first direction Z and configured to define the cavity 3. The second component 22 and the first component 12 are arranged along the first direction Z and configured to define the discharge port 4.

When the second component 22 is worn, the worn second component 22 only needs to be removed, and a new second component 22 is installed, thereby reducing the downtime of the coating die, improving the coating efficiency, and reducing the production costs. The worn second component 22 can be individually polished and reused, thereby extending the service life of the second component 22.

In some embodiments, the first component 12 and the second component 22 may be made of the same material or different materials. For example, the first component 12 and the second component 22 are made of the same material.

In some embodiments, the shapes of the first component 12 and the second component 22 may be the same or different. For example, when viewed from the third direction X, the shapes of the first component 12 and the second component 22 are the same. The third direction X, the second direction Y, and the first direction Z are perpendicular to each other.

In some embodiments, the first main body 11 is connected to the second main body 21.

In some embodiments, the feed port 5 is provided on the second main body 21.

In some embodiments, the coating die further includes a second fixing member 8. The second fixing member 8 is movably disposed on the second main body 21 along the first direction Z. In the first direction Z, a portion of the second component 22 is clamped between the second fixing member 8 and the second main body 21.

In some embodiments, the second fixing member 8 is threadedly connected to the second main body 21. The second fixing member 8 can rotate to adjust pressure applied to the second component 22 by the second fixing member 8.

In some embodiments, a side of the second main body 21 along the second direction Y is provided with a third recess 211. A portion of the second component 22 is accommodated in the third recess 211.

In some embodiments, the second main body 21 includes a third protrusion 212 and a fourth protrusion 213 arranged along the first direction Z. The third recess 211 is disposed between the third protrusion 212 and the fourth protrusion 213. The third protrusion 212 is located on a side of the fourth protrusion 213 close to the first die 1.

In some embodiments, the second fixing member 8 is movably connected to the fourth protrusion 213 along the first direction Z and configured to press against the second component 22. Optionally, the second fixing member 8 is threadedly connected to the fourth protrusion 213.

In some embodiments, the second component 22 is disposed on a side of the second main body 21 along the second direction Y. A side of the second component 22 facing the second main body 21 along the second direction Y is provided with a fourth recess 221. The second main body 21 includes a third protrusion 212 accommodated in the fourth recess 221. The third protrusion 212 is fixed to the second component 22.

In some embodiments, the second component 22 includes a fifth surface 22a facing the first die 1. The discharge port 4 is formed between the first surface 12a and the fifth surface 22a.

In some embodiments, the first surface 12a is parallel to the fifth surface 22a. Optionally, the parallelism between the first surface 12a and the fifth surface 22a is controlled within 2 µm to 5 µm.

In some embodiments, the fourth recess 221 extends to the fifth surface 22a along the first direction Z. The third protrusion 212 includes a sixth surface 212a facing the first protrusion 112. The fifth surface 22a is flush with the sixth surface 212a.

In some embodiments, a surface hardness of the second component 22 is higher than a surface hardness of the second main body 21.

In some embodiments, the surface hardness of the second component 22 is 30 HRC to 70 HRC.

In some embodiments, a material of the second component 22 includes at least one of cast stone, alumina ceramic, silicon carbide ceramic, zirconia ceramic, engineering polymer plastic, wear-resistant rubber, stainless steel with a diamond-like coating on a surface, or stainless steel with a nanocomposite coating on an outer surface.

In some embodiments, the first component 12 and the second component 22 are symmetrical about a reference plane. The reference plane is perpendicular to the first direction Z.

In some embodiments, the first recess 111 extends through the first main body 11 along the third direction X.

In some embodiments, the second recess 121 extends through the first component 12 along the third direction X.

In some embodiments, the third recess 211 extends through the second main body 21 along the third direction X.

In some embodiments, the fourth recess 221 extends through the second component 22 along the third direction X.

In some embodiments, the coating die is configured to coat a battery electrode plate.

In some embodiments, a dimension of the coating die along the third direction X is 150 mm to 300 mm larger than a dimension of the battery electrode plate along the third direction X. Optionally, the dimension of the battery electrode plate along the third direction X is 1000 mm to 1800 mm.

In some embodiments, a dimension of the cavity 3 along the third direction X is 75 mm to 200 mm smaller than the dimension of the coating die along the third direction X.

In some embodiments, a side of the second main body 21 facing the first main body 11 is provided with an accommodating recess. The cavity 3 includes the accommodating recess.

In some embodiments, along the second direction Y, a dimension of the accommodating recess is 60 mm to 90 mm.

In some embodiments, the coating die further includes a pressing strip 13 disposed in the cavity 3. The pressing strip 13 may be fixed to the first main body 11. The pressing strip 13 and a wall of the accommodating recess may define a flow channel for a slurry to flow.

In some embodiments, along the second direction Y, a dimension of the pressing strip 13 is 3 mm to 10 mm smaller than the dimension of the accommodating recess.

In some embodiments, a dimension of the pressing strip 13 along the third direction X is 5 mm to 20 mm smaller than a dimension of the cavity along the third direction X.

In some embodiments, one pressing strip 13 may be provided, or a plurality of pressing strips 13 spliced along the third direction X may be provided.

In some embodiments, the pressing strip 13 is fixed to the first main body 11 through a bolt.

In some embodiments, a material of the first main body 11 is stainless steel. Optionally, the material of the first main body 11 is SUS630 stainless steel. Further optionally, the first main body 11 may undergo heat treatment to increase the surface hardness of the first main body 11 to 25 HRC to 45 HRC, improving the wear resistance of the first main body 11.

In some embodiments, a material of the second main body 21 is stainless steel. Optionally, the material of the second main body 21 is SUS630 stainless steel. Further optionally, the second main body 21 may undergo heat treatment to increase the surface hardness of the second main body 21 to 25 HRC to 45 HRC, improving the wear resistance of the second main body 21.

In some embodiments, during coating, a flow rate of the slurry at the discharge port 4 is 0.03 m/s to 0.5 m/s. The coating die of this application can perform high-speed coating, improving the coating efficiency. The first component 12 and the second component 22 have high wear resistance and can be applied to high-speed coating scenarios.

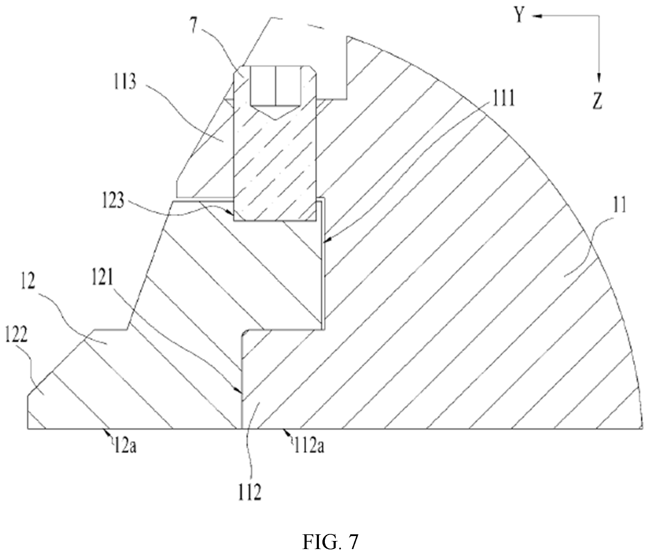

FIG. 7 is a partial schematic cross-sectional view of a coating die according to some other embodiments of this application.

Referring to FIG. 7, in some embodiments, a side of a first component 12 facing a first fixing member 7 along a first direction Z is provided with a limiting recess 123. The first fixing member 7 abuts against a bottom surface of the limiting recess 123.

For example, the limiting recess 123 is recessed from a third surface 12e.

In the embodiments of this application, a portion of the first fixing member 7 extends into the limiting recess 123, and the first fixing member can also limit the first component 12 in another direction intersecting the first direction Z, thereby improving the stability of the first component 12 and improving the consistency of the coating weight.

In some embodiments, the first component 12 is provided with a plurality of limiting recesses 123. The plurality of limiting recesses 123 are in one-to-one correspondence with a plurality of first fixing members 7.

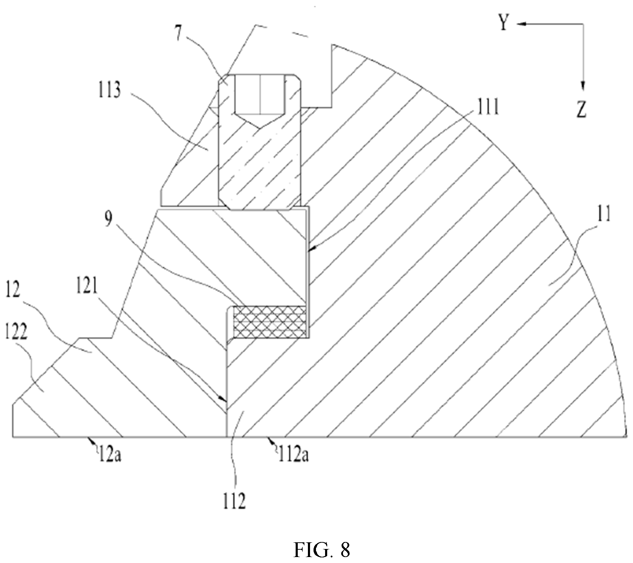

FIG. 8 is a partial schematic cross-sectional view of a coating die according to some other embodiments of this application.

Referring to FIG. 8, in some embodiments, the coating die further includes at least one adjustment sheet 9 disposed in a first recess 111. In a first direction Z, the adjustment sheet 9 is disposed between a first protrusion 112 and a first component 12.

One or more adjustment sheets 9 may be provided. Optionally, a plurality of adjustment sheets 9 are stacked between the first protrusion 112 and the first component 12.

When the first component 12 is worn, a surface of the first component 12 facing a second die 2 needs to be polished. After polished, a dimension of the first component 12 along the first direction Z decreases. If the first component 12 remains in an original position, a spacing between the first component 12 and the second die 2 along the first direction Z increases, and a discharge port 4 is also enlarged. In the embodiments of this application, the adjustment sheet 9 can be removed to move the entire first component 12 toward the second die 2, compensating for the dimensional loss of the first component 12 after polished, and maintaining a constant spacing between the first component 12 and the second die 2 along the first direction Z.

For example, after one adjustment sheet 9 is removed, the first fixing member 7 can move along the first direction Z to maintain pressure.

In some embodiments, a plurality of adjustment sheets 9 may be stacked between the first protrusion 112 and the first component 12. After polished each time, one adjustment sheet 9 can be removed. Thus, the first component 12 of the embodiments of this application can be polished multiple times.

Optionally, 10 to 20 adjustment sheets 9 are disposed between the first protrusion 112 and the first component 12.

In some embodiments, a thickness of the adjustment sheet 9 is 20 µm to 30 µm. The thickness of the adjustment sheet 9 may be consistent with a thickness that can be removed when the first component 12 is polished one time. The adjustment sheet 9 of the embodiments of this application has a small thickness, which can reduce the single polishing amount of the first component 12, reduce the polishing difficulty, and increase the number of cycles for reusing the first component 12.

In some embodiments, the coating die further includes a first fixing member 7 and at least one adjustment sheet 9. The adjustment sheet 9 is accommodated in the second recess 121. In the first direction Z, the first fixing member 7 is located on a side of the first component 12 facing away from the first protrusion 112 and configured to press against the first component 12. The adjustment sheet 9 is disposed between the first component 12 and the first protrusion 112.

In some embodiments, a plurality of adjustment sheets (not shown) stacked along the first direction Z are also disposed between a second component 22 and a third protrusion 212.

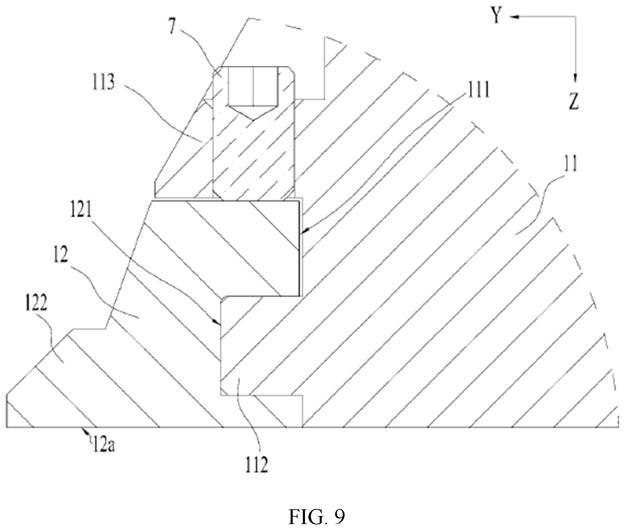

FIG. 9 is a partial schematic cross-sectional view of a coating die according to some other embodiments of this application.

Referring to FIG. 9, in some embodiments, both sides of a second recess 121 along a first direction Z are closed. A first protrusion 112 can be inserted into the second recess 121 and limit sidewalls of the first recess 111 on both sides along the first direction Z.

In the embodiments of this application, the stability of the first component 12 can be improved.

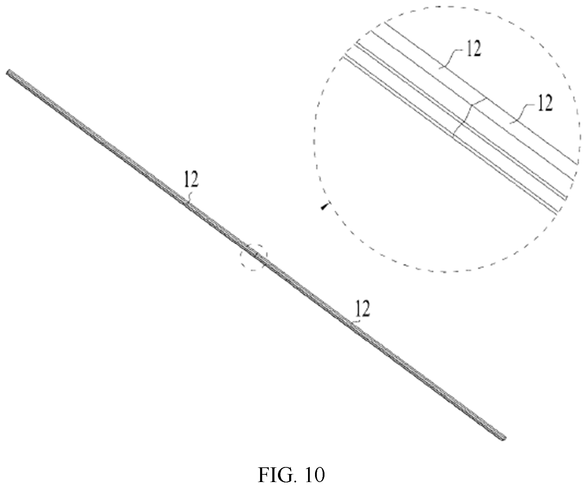

FIG. 10 is a schematic structural diagram of a first component of a coating die according to some other embodiments of this application.

Referring to FIG. 10, in some embodiments, a first die 1 includes a plurality of first components 12 arranged along a third direction X. The third direction X is perpendicular to a first direction Z. Adjacent first components 12 abut against and are connected to each other along the third direction X.

In the embodiments of this application, an extension length of a single first component 12 can be reduced, reducing the forming difficulty of the first component 12.

In some embodiments, adjacent first components 12 are bonded or snapped together.

In some embodiments, a second die 2 includes a plurality of second components 22 arranged along the third direction X. Adjacent second components 22 abut against and are connected to each other along the third direction X.

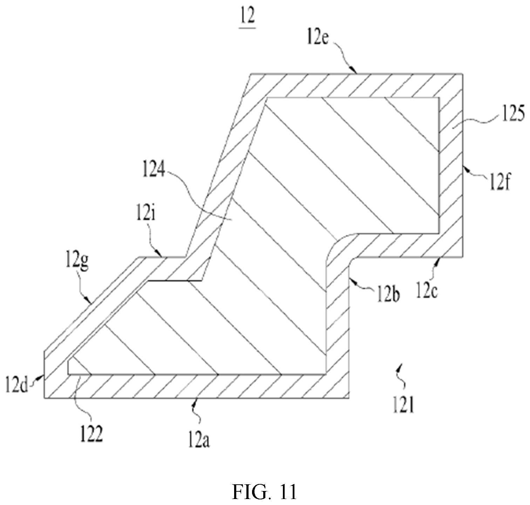

FIG. 11 is a schematic cross-sectional view of a coating die according to some other embodiments of this application.

Referring to FIG. 11, in some embodiments, a first component 12 includes a substrate 124 and a protective layer 125 disposed on an outer surface of the substrate 124. At least a portion of the protective layer 125 is located on a side of the substrate 124 facing a second die 2. A surface hardness of the protective layer 125 is higher than a surface hardness of the substrate 124.

The provision of the protective layer 125 with high surface hardness allows the first component 12 to be more wear-resistant, thereby extending the service life of the first component 12 and reducing the frequency of replacing the first component 12. The substrate 124 can have a relatively low surface hardness, allowing for more flexible material selection for the substrate 124, thereby reducing the cost of the first component 12.

In some embodiments, the protective layer 125 covers the entire substrate 124.

In some embodiments, a material of the substrate 124 is the same as a material of a first main body 11. In the embodiments of this application, the types of the materials can be reduced, reducing the cost.

In some embodiments, the protective layer 125 includes a diamond-like coating or a nanocomposite coating. Both the diamond-like coating and the nanocomposite coating have high surface hardness.

In some embodiments, a second component has a structure similar to that of the first component and also includes a substrate and a protective layer.

An embodiment of this application further provides a coating apparatus for a battery electrode plate. The coating apparatus includes the coating die according to any one of the foregoing embodiments. The coating apparatus of this embodiment of this application can improve the coating efficiency and coating yield of the electrode plate.

Referring to FIG. 1 to FIG. 6 and FIG. 8, an embodiment of this application provides a coating die including a first die 1, a second die 2, and a gasket 6. The first die 1 and the second die 2 are arranged along a first direction Z. The gasket 6 is disposed between the first die 1 and the second die 2.

The first die 1 includes a first main body 11 and a first component 12. The first component 12 is detachably connected to the first main body 11. The second die 2 includes a second main body 21 and a second component 22 detachably connected to the second main body 21. The second main body 21 and the first main body 11 are arranged along the first direction Z and configured to define a cavity 3 for accommodating a slurry. The second component 22 and the first component 12 are arranged along the first direction Z and configured to define a discharge port 4. The discharge port 4 is in communication with the cavity 3.

The first direction Z, a second direction Y, and a third direction X are perpendicular to each other. A side of the first main body 11 along the second direction Y is provided with a first recess 111. The first main body 11 includes a first protrusion 112 and a second protrusion 113 arranged along the first direction Z. The first recess 111 is disposed between the first protrusion 112 and the second protrusion 113. The first protrusion 112 is located on a side of the second protrusion 113 close to the second main body 21. A portion of the first component 12 is accommodated in the first recess 111.

A side of the first component 12 facing the first main body 11 along the second direction Y is provided with a second recess 121. The first protrusion 112 is accommodated in the second recess 121. The first component 12 includes a first surface 12a facing the second die 2. A discharge port 4 is formed between the first surface 12a and the second component 22. The second recess 121 extends to the first surface 12a along the first direction Z.

The coating die further includes a first fixing member 7 and a plurality of adjustment sheets 9. The plurality of adjustment sheets 9 are accommodated in the second recess 121. In the first direction Z, the first fixing member 7 is threadedly connected to the second protrusion 113 and presses against the first component 12. The plurality of adjustment sheets 9 are stacked along the first direction Z between the first component 12 and the first protrusion 112.

A surface hardness of the first component 12 is higher than a surface hardness of the first main body 11. A material of the first component 12 is stainless steel with a diamond-like coating on a surface or stainless steel with a nanocomposite coating on an outer surface.

Optionally, the first component 12 and the second component 22 have the same structures.

Although this application has been described with reference to preferred embodiments, various improvements can be made, and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A coating die, comprising:
a first die comprising a first main body and a first component, the first component being detachably connected to the first main body; and
a second die arranged with the first die along a first direction, wherein a cavity for accommodating a slurry is formed between the second die and the first main body, and a discharge port in communication with the cavity is formed between the first component and the second die.

2. The coating die according to claim 1, further comprising a first fixing member, wherein the first fixing member is movably disposed on the first main body along the first direction; and
in the first direction, a portion of the first component is clamped between the first fixing member and the first main body.

3. The coating die according to claim 2, wherein the first fixing member is threadedly connected to the first main body, and the first fixing member is able to rotate to adjust pressure applied to the first component by the first fixing member.

4. The coating die according to claim 2 or 3, wherein a side of the first component facing the first fixing member along the first direction is provided with a limiting recess, and the first fixing member abuts against a bottom surface of the limiting recess.

5. The coating die according to any one of claims 1 to 4, wherein a side of the first main body along a second direction is provided with a first recess, the second direction intersecting the first direction; and
a portion of the first component is accommodated in the first recess.

6. The coating die according to claim 5, wherein the first main body comprises a first protrusion and a second protrusion arranged along the first direction, the first recess is disposed between the first protrusion and the second protrusion, and the first protrusion is located on a side of the second protrusion close to the second die; and
the coating die further comprises a first fixing member, and the first fixing member is movably connected to the second protrusion along the first direction and configured to press against the first component.

7. The coating die according to claim 6, further comprising at least one adjustment sheet disposed in the first recess, wherein
in the first direction, the adjustment sheet is disposed between the first protrusion and the first component.

8. The coating die according to claim 7, wherein a thickness of the adjustment sheet is 20 µm to 30 µm.

9. The coating die according to any one of claims 1 to 8, wherein the first component is disposed on a side of the first main body along a second direction, the second direction intersecting the first direction; and
a side of the first component facing the first main body along the second direction is provided with a second recess, the first main body comprises a first protrusion accommodated in the second recess, and the first protrusion is fixed to the first component.

10. The coating die according to claim 9, further comprising a first fixing member and at least one adjustment sheet, wherein the adjustment sheet is accommodated in the second recess; and
in the first direction, the first fixing member is located on a side of the first component facing away from the first protrusion and configured to press against the first component, and the adjustment sheet is disposed between the first component and the first protrusion.

11. The coating die according to claim 9 or 10, wherein the first component comprises a first surface facing the second die, the discharge port is formed between the first surface and the second die, and the second recess extends to the first surface along the first direction; and
the first protrusion comprises a second surface facing the second die, and the first surface is flush with the second surface.

12. The coating die according to claim 11, wherein the first component further comprises a first side surface and a second side surface for defining the second recess, the second side surface is located on a side of the first protrusion away from the second die, and the first side surface is connected to the second side surface and the first surface; and
in the second direction, the first protrusion abuts against the first side surface.

13. The coating die according to any one of claims 9 to 12, wherein an end of the first component away from the first main body along the second direction has a first end portion; and
in a direction away from the first main body, a cross section of the first end portion perpendicular to the second direction gradually decreases.

14. The coating die according to any one of claims 1 to 13, wherein the first die comprises a plurality of the first components arranged along a third direction, the third direction being perpendicular to the first direction; and
adjacent first components abut against and are connected to each other along the third direction.

15. The coating die according to any one of claims 1 to 14, wherein a surface hardness of the first component is higher than a surface hardness of the first main body.

16. The coating die according to any one of claims 1 to 15, wherein the surface hardness of the first component is 30 HRC to 70 HRC.

17. The coating die according to any one of claims 1 to 16, wherein the first component comprises a substrate and a protective layer disposed on an outer surface of the substrate, and at least a portion of the protective layer is located on a side of the substrate facing the second die; and
a surface hardness of the protective layer is higher than a surface hardness of the substrate.

18. The coating die according to claim 17, wherein a material of the substrate is the same as a material of the first main body.

19. The coating die according to claim 17 or 18, wherein the protective layer comprises a diamond-like coating or a nanocomposite coating.

20. The coating die according to any one of claims 1 to 19, wherein a material of the first component comprises at least one of cast stone, alumina ceramic, silicon carbide ceramic, zirconia ceramic, engineering polymer plastic, wear-resistant rubber, stainless steel with a diamond-like coating on a surface, or stainless steel with a nanocomposite coating on an outer surface.

21. The coating die according to any one of claims 1 to 20, wherein the second die comprises a second main body and a second component, the second main body and the first main body are arranged along the first direction and configured to define the cavity, and the second component and the first component are arranged along the first direction and configured to define the discharge port.

22. A coating apparatus for a battery electrode plate, comprising the coating die according to any one of claims 1 to 21.
